# EUROPEAN PATENT APPLICATION

(11) **EP 2 105 812 A2**
(43) Date of publication of application: **30.09.2009**
(21) Application number: 09156209.0
(22) Date of filing: 25.03.2009
(51) Int. Cl.: G05B 19/042

(54) **Glassware molding machine control system**

(30) Priority: 27.03.2008 IT TO20080235
(71) Applicant: Bottero S.p.A., 12100 Cuneo (IT)
(72) Inventor: Viada, Bruno, 12010, MADONNA DELLE GRAZIE (IT)
(74) Representative: Jorio, Paolo

(57) **Abstract**

A control system (10) is disclosed for controlling a glassware molding machine (1) having a number of forming sections (4), each for successively forming a number of glass articles. The control system has a number of automatisms (10a-10c) for controlling respective actuating mechanisms of the machine (1), which cooperate to form the glass articles; and a central control unit (14) connected individually to the automatisms (10a-10c) and having a processing unit (14b) configured to control and coordinate activation of the actuating mechanisms of the automatisms (10a-10c). The processing unit (14b) is configured to determine the activation times of the actuating mechanisms of the automatisms (10a-10c) on the basis of a desired production plan, and to transmit corresponding control signals to the automatisms (10a-10c).

## Description

The present invention relates to a control system for a glassware, in particular, hollow glassware, molding machine.

Glassware is known to be molded on what are known as I.S. (Individual Section) molding machines, which comprise a feed assembly for supplying a succession of glass gobs; and a number of simultaneously, independently operating forming sections, each of which has a mold assembly, is fed by the feed assembly with respective glass gobs, and successively forms respective glass articles. More specifically, the feed assembly comprises: an extruder for forming a rope of molten glass; a scissor cutting assembly for cutting the rope crosswise into a succession of glass gobs; a gob distributor, receiving the gobs from the cutting assembly; and, for each mold assembly in the forming sections, a respective gob dispenser for receiving the glass gobs from the distributor and feeding them to the associated mold assembly. Once molded, the glass articles are expelled from the molds by respective actuator assemblies, which expel and convey each glass article from the respective mold onto a common conveyor; this common conveyor transfers the glass articles to a furnace.

Each forming section comprises a large number of actuating mechanisms, some shared by a number of sections and others specific to a given section (such as mechanisms for handling or processing the rough-molded articles during the molding process, mold opening and closing mechanisms, etc.), which are controlled by a number of actuators, including electric and pneumatic actuators, and servomechanisms. Operation of I.S. machines therefore involves complex joint control of all the actuating mechanisms to carry out a given production plan (or recipe) based, for example, on the type of article being produced or the type of process adopted to produce it. In particular, the various actuating mechanisms have to be synchronized to ensure the set production plan is carried out correctly.

The control systems currently employed in I.S. machines have what is known as a "distributed-intelligence" architecture, which envisages the presence of a number of appropriately interconnected intelligent control units (controllers, provided with respective microprocessor computers).

Control systems of this sort are divided into a given number of functional blocks (known as "automatisms"), each with its own control unit. The automatisms may, for example, correspond to the various forming sections of the I.S. machine, or may include operating mechanisms involved in the same function, regardless of their location within the various forming sections. Whichever the case, each control unit performs processing operations, on the basis of the set production plan, to determine timings of activation (i.e. implementing the automation of) the respective actuating mechanisms, and has to be coordinated with the other control units to carry out the glassware molding plan.

To synchronize and coordinate operation of the various automatisms, control systems normally comprise a communications bus (e.g. a high-speed fieldbus) by which the control units of the various automatisms dialogue with one another. Alternatively, the automatisms are synchronized using clock generators which supply common timing signals to the various control units.

Known control systems normally also comprise a supervisor connected to the automatism control units, and which performs production planning operations, and transmits set production plan data to the control units. The supervisor may, for example, comprise an industrial PC (Personal Computer) with a user interface for operator production plan control.

EP-B-1 537 052, for example, discloses a glassware molding machine control system comprising three control units for independent "intelligent" control of respective automatisms as a function of a given production plan, and in particular: a first control unit relating to a glass gob feed assembly; a second control unit relating to a glassware forming assembly; and a third control unit relating to a glassware handling assembly. The three control units are interconnected by a serial data bus to coordinate and synchronize operations of the respective operating assemblies.

A control system of the type described normally has a surplus (redundancy) of automation control processing resources and power, and data storage resources. In particular, processing modules and/or databanks containing automation information are often duplicated in a number of control units, and a number of control units often share one or more operating mechanisms (e.g. one or more glassware handling assemblies), thus making shared control of the mechanisms difficult. More generally speaking, the need for dialoguing between the control units intelligently controlling the various automatisms of the I.S. machine poses serious timing and communication speed problems, which are further compounded by continual developments in I.S. machines, which inevitably increases the number of functions performed by the forming section and hence the number of automatisms requiring synchronized control.

It is an object of the present invention to provide a glassware molding machine control system designed to eliminate the above drawbacks of known molding machines.

According to the present invention, there is provided a control system as defined in the accompanying Claims.

A non-limiting embodiment of the invention will be described by way of example with reference to the accompanying drawings, in which:
Figure 1 shows a schematic view in perspective of a preferred embodiment of a glassware molding machine;
Figure 2a shows a simplified block diagram of a control system of Figure 1 machine in accordance with one embodiment of the present invention; and
Figure 2b shows a simplified block diagram of a central control unit of the Figure 2a system.

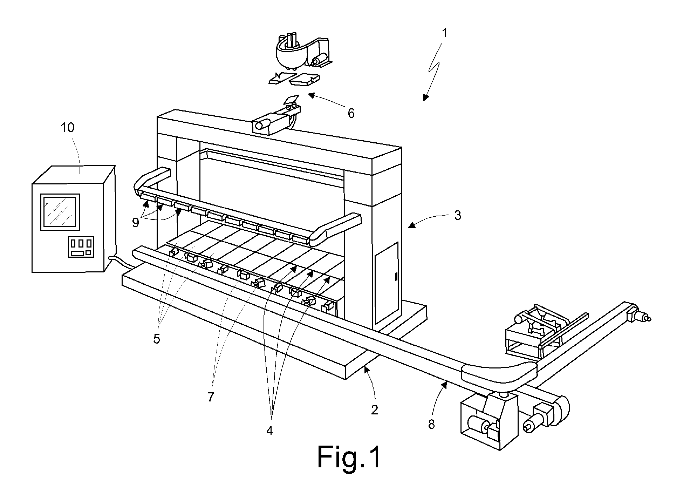

Number 1 in Figure 1 indicates as a whole an I.S. glassware manufacturing machine comprising a bed 2; a gantry frame 3 extending from bed 2; and a number of forming sections 4 (shown schematically) for forming respective glass articles (not shown) and comprising a number of pneumatic, electric actuating mechanisms and/or servomechanisms. More specifically, each forming section 4 comprises: a respective mold assembly 5 (of a per-se known type, here not described in detail) for successively forming a number of glass articles from respective glass gobs (not shown) supplied by a feed assembly 6 (comprising respective actuating mechanisms); a respective ejector assembly 7 (also comprising respective actuating mechanisms) for expelling the glass articles from the relative mold assembly onto a conveyor 8 for transfer to a furnace (not shown); and an airtight pushbutton panel 9 which, in the example shown, is fitted to frame 3, over bed 2, and enables the operators of I.S. machine 1 to control the machine manually, stopping and/or modifying the production cycles. More specifically, mold assembly 5 comprises at least one rough mold and a finish mold; the rough mold receives a glass gob from feed assembly 6 to form a semifinished glass article, which is rotated by an inverter into the finish mold to blow-mold the finished glass article. Ejector assembly 7 in turn comprises a so-called "take-out" element for removing the finished glass article from the finish mold; and a so-called "pusher" element for pushing the glass article onto conveyor 8 (neither the take-out nor the pusher elements are shown in Figure 1). Each pushbutton panel 9 comprises a number of buttons, and indicator lights indicating particular operating conditions of I.S. machine 1.

I.S. machine 1 is controlled by a control system 10 (shown schematically), which implements automation of I.S. machine 1 as a whole. More specifically, control system 10 is configured to control and coordinate respective actuators (electric or pneumatic) and servomechanisms of the actuating mechanisms of forming sections 4, and is supplied with status and feedback information from sensors (not shown) on I.S. machine 1, and with operator commands entered from pushbutton panels 9.

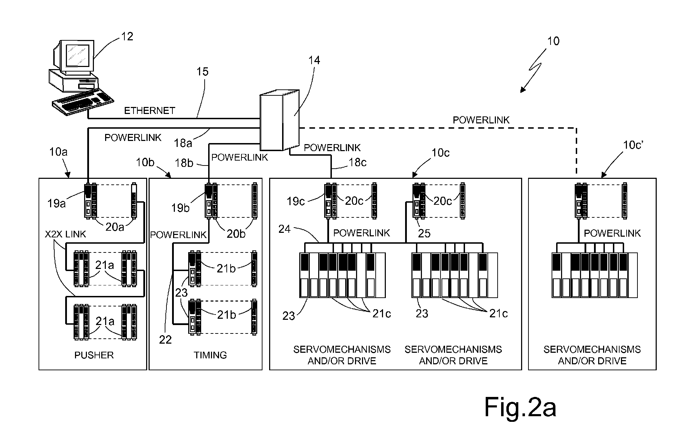

As shown schematically in Figure 2a, control system 10 comprises a number of automatisms (or functional blocks) 10a-10c, such as: a first automatism 10a for controlling activation of pusher elements in ejector assembly 7 of I.S. machine 1; a second automatism 10b, so-called "timing" automatism, for controlling activation of pneumatic actuating mechanisms of forming sections 4; and a third automatism 10c for controlling activation of electric actuators and/or servomechanisms of forming sections 4.

Control system 10 comprises: a supervisor unit 12, e.g. provided with an industrial PC and an operator user interface; and a central control unit 14 connected to supervisor unit 12 over a high-speed, two-way, serial data bus, e.g. an Ethernet bus 15.

Supervisor unit 12, e.g. under control of an operator, processes and draws up production plans (so-called "recipes"), and accordingly transmits production data, relative to the processes to be implemented on I.S. machine 1, to central control unit 14 over Ethernet bus 15.

Central control unit 14 receives the production data from supervisor unit 12, and accordingly performs processing operations to determine the exact times at which to activate the actuating mechanisms of automatisms 10a-10c of the whole I.S. machine 1, in order to implement the set production plans.

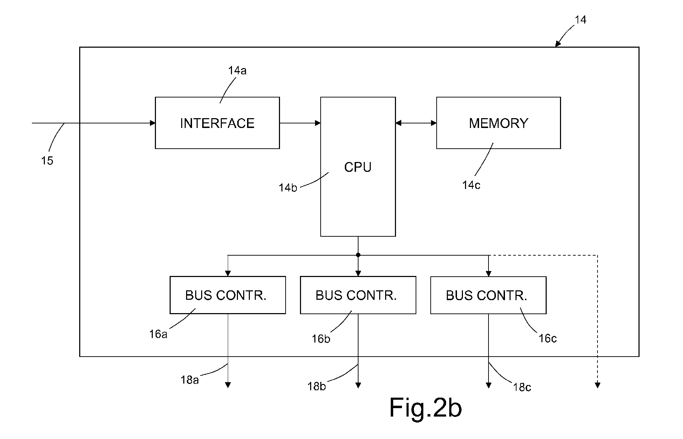

More specifically, and as shown schematically in Figure 2b, central control unit 14 comprises: an interface 14a, adapted to be coupled to Ethernet bus 15 to receive production data from supervisor unit 12; a central processing unit (CPU) 14b, connected to interface 14a, and which performs the processing operations using the received production data to generate commands by which to activate the actuating mechanisms of I.S. machine 1; a memory unit 14c accessible by central processing unit 14b and storing one or more databanks containing information necessary to control automation of I.S. machine 1; and a number of bus controllers 16a-16c, equal in number to automatisms 10a-10c, and operatively coupled to central processing unit 14b.

Control system 10 also comprises a number of high-speed fieldbuses 18a-18c equal in number to automatisms 10a-10c and employing, for example, the POWERLINK communication protocol controlled by the "Ethernet POWERLINK Standardization Group". Each fieldbus 18a-18c connects central control unit 14 (in particular a relative bus controller 16a-16c) to a respective one of automatism 10a-10c to permit two-way data communication (in particular, transmission of activation commands and reception of feedback and status signals by central control unit 14).

According to one aspect of the present invention, control system 10 comprises a single processing unit (in particular, central processing unit 14b of central control unit 14) for centralized processing of the production data, to determine the activation timings of the actuating mechanisms of the whole I.S. machine 1. Automatisms 10a-10c have no processing capacity, with respect to automation control to perform the production plan, receive respective activation commands from central processing unit 14b, and accordingly command the respective actuating mechanisms. In terms of automation management, control system 10 therefore has a "centralized-intelligence" as opposed to distributed-intelligence architecture. More specifically, the operations performed in forming sections 4 are synchronized by the same centralized processing of the production plan in central control unit 14, so automatisms 10a-10c are not interconnected over a data communications bus.

Each automatism 10a-10c comprises a bus coupler 19a-19c connectable to respective fieldbus 18a-18c to receive activation commands; and one or more actuating modules connected to respective bus coupler 19a-19c to control and drive the actuators (electric, pneumatic) and/or servomechanisms of the respective actuating mechanisms on the basis of the activation commands received.

More specifically, first automatism 10a comprises: a first bus coupler 19a connected to first fieldbus 18a and for controlling data exchange between first automatism 10a and central control unit 14; a number of first input/output I/O modules 20a for controlling data input (in particular, said activation commands) and data output (in particular, feedback and status signals relative to the execution of the activation commands); and a number of first activation modules 21a which, on the basis of the activation commands received, command activation of respective pusher elements (e.g. in a known ramp pattern). First activation modules 21a are connected to first input/output modules 20a and to one another over a high-speed, e.g. X2X LINK or CAN OPEN connection.

Second automatism 10b comprises: a second bus coupler 19b connected to second fieldbus 18b and for controlling data exchange between second automatism 10b and central control unit 14; a number of second input/output I/O modules 20b (including I/O modules for controlling pushbutton panels 9 of forming sections 4); and a number of second activation modules 21b which, on the basis of the activation commands received, command actuators (e.g. proportional valves) of respective pneumatic actuating mechanisms. More specifically, second activation modules 21b are connected to second bus coupler 19b over an auxiliary bus 22, e.g. a high-speed POWERLINK protocol bus, to which they are coupled by respective auxiliary interfaces 23.

In substantially the same way, third automatism 10c comprises: a third bus coupler 19c connected to third fieldbus 18c and for controlling data exchange between third automatism 10c and central control unit 14; a number of third input/output I/O modules 20c; one or more power modules 23, and a number of third activation modules 21c, which, on the basis of the activation commands received, command electric motors (e.g. direct-current or step motors) and/or servomechanisms of forming sections 4 of I.S. machine 1. Third activation modules 21c and power modules 23 are connected to third input/output modules 20c and to one another by an extension 24 of fieldbus 18c, operating at high-speed with the POWERLINK protocol. As shown in Figure 2a, third activation modules 21c and power modules 23 can be divided into one or more groups, with which are associated respective third input/output I/O modules 20c connected to extension 24 of fieldbus 18c by a respective interface 25.

The main advantage of the I.S. glassware molding machine 1 and control system as described above is that of solving the timing and data communication problems of known machines.

Indeed, automation operations (consisting in processing the production plan and determining the activation times of the various actuating mechanisms) are performed by a single central processing unit 14b, which generates corresponding activation commands for the various automatisms 10a-10c of I.S. machine 1 as a whole. No data communication between automatisms 10a-10c is therefore required to coordinate and synchronize them, and the same automatisms 10a-10c have no independent intelligence as regards automation control. More specifically, respective fieldbuses 18a-18c only exchange between central control unit 14 and automatisms 10a-10c data and signals relating to the execution of the activation commands, while no data are exchanged relating to automation control and management.

Control system 10 is improved as regards automation control processing power and resources; data storage resources are concentrated in a single central control unit 14, with no wasteful duplication within the various automatisms 10a-10c.

Control system 10 is therefore cheaper and easier to implement and maintain, and is faster (by involving no data communication problems between the various automatisms).

Clearly, changes may be made to the machine and control system as described and illustrated herein without, however, departing from the scope of the present invention as defined in the accompanying claims.

In particular, the system shown in Figure 2 is intended purely as a non-limiting example, and the functional subdivision of control system 10 may differ. For example (as shown in Figure 2a), further automatisms 10c' may be provided to control activation of the electric motors and servomechanisms (e.g. an automatism for each of forming sections 4); the further automatisms 10c' also have no processing capacity in terms of automation control.

Also, different communication protocols may be used between central control unit 14 and automatisms 10a-10c, or between the functional modules within the same automatisms.

## Claims

1. A control system (10) for controlling a glassware molding machine (1) having a number of forming sections (4), each configured to successively form a number of glass articles; said control system (10) comprising a number of automatisms (10a-10c) for controlling respective actuating mechanisms of said machine (1), which are configured to cooperate to form said glass articles,
**characterized by** comprising a central control unit (14), individually connected to said automatisms (10a-10c) and having a processing unit (14b) configured to control and coordinate activation of the actuating mechanisms of said automatisms (10a-10c).

2. The system as claimed in claim 1, wherein said processing unit (14b) is configured to determine the activation times of the actuating mechanisms of said automatisms (10a-10c) on the basis of a desired production plan, involving coordination of said actuating mechanisms to form said glass articles, and is configured to transmit corresponding control signals to said automatisms (10a-10c); and wherein said automatisms (10a-10c) are configured to command activation of said respective actuating mechanisms on the basis of the received control signals.

3. The system as claimed in claim 2, wherein said central control unit (14) is connected to each of said automatisms (10a-10c) through a respective fieldbus (18a-18c), in particular having a POWERLINK protocol.

4. The system as claimed in Claim 3, wherein said central control unit (14) comprises a number of bus controllers (16a-16c), each connected to a respective one of said fieldbuses (18a-18c) and configured to control data exchange over said respective fieldbus (18a-18c).

5. The system as claimed in claim 3 or 4, wherein each of said automatisms (10a-10c) comprises: a number of activation modules (21a-21c) configured to control said respective actuating mechanisms; and a respective bus coupler device (19a-19c) connectable to a respective one of said fieldbuses (18a-18c) to receive respective ones of said control signals, and to communicate said respective control signals to corresponding activation modules (21a-21c).

6. The system as claimed in any one of the foregoing claims, wherein said automatisms (10a-10c) are intended to control different functional units of said machine (1), which are configured to perform respective operations cooperating in the formation of said glass articles.

7. The system as claimed in claim 6, wherein said automatisms (10a-10c) include at least: a first automatism (10a), configured to control activation of pusher elements of said forming sections (4) of said machine (1); a second automatism (10b), configured to control activation of pneumatic actuating mechanisms of said forming sections (4); and a third automatism (10c), configured to control activation of electric actuators and/or servomechanisms of said forming sections (4).

8. The system as claimed in any one of the foregoing claims, comprising a supervisor unit (12) connected to said central control unit (14) over a serial bus (15), in particular with an ETHERNET protocol, and which is configured to determine production plans for said machine (1), and transmit them to said central control unit (14).

9. The system as claimed in any one of the foregoing claims, wherein automation operations of said machine (1) as a whole are concentrated in said central control unit (14), and said automatisms (10a-10c) have no independent processing capacity in terms of said automation.

10. A central control unit (14) in a control system (10) as claimed in any one of the foregoing claims.

11. A glassware molding machine (1) having a number of forming sections (4), each configured to successively form a number of glass articles; **characterized by** comprising a control system (10) as claimed in any one of claims 1-9.

12. A method of controlling a glassware molding machine (1) having a number of forming sections (4), each configured to successively form a number of glass articles,
**characterized by** comprising, by a central control unit (14) individually connected to a number of automatisms (10a-10c) configured to control respective actuating mechanisms of said machine (1), which cooperate to form said glass articles, the step of controlling and coordinating activation of the actuating mechanisms of said automatisms (10a-10c).

13. The method as claimed in claim 12, wherein said controlling and coordinating step comprises determining the activation times of the actuating mechanisms of said automatisms (10a-10c) on the basis of a desired production plan involving coordination of said actuating mechanisms to form said glass articles, and transmitting corresponding control signals to said automatisms (10a-10c); said method further comprising, by said automatisms (10a-10c), the step of commanding activation of said respective actuating mechanisms on the basis of said control signals.

14. The method as claimed in claim 12 or 13, comprising, by said automatisms (10a-10c), the step of controlling different functional units of said machine (1), which perform respective operations cooperating in the formation of said glass articles.

15. The method as claimed in any one of the foregoing claims, wherein said controlling and coordinating step comprises centralized control, by said central control unit (14), of automation operations of said machine (1) as a whole.

16. A computer program product comprising computer instructions which, when executed in a processing unit (14b) of a central control unit (14) as claimed in claim 10, cause said processing unit (14b) to implement the control method as claimed in any one of claims 12-15.
